# EUROPEAN PATENT APPLICATION

(11) **EP 2 890 045 A1**
(43) Date of publication of application: **01.07.2015**
(21) Application number: 13830554.5
(22) Date of filing: 21.06.2013
(51) Int. Cl.: H04L 9/08, G06F 21/64, H04L 9/32, H04N 7/167, H04N 7/173

(54) **SIGNATURE VALIDATION INFORMATION TRANSMISSION METHOD, INFORMATION PROCESSING DEVICE, INFORMATION PROCESSING METHOD, AND BROADCAST TRANSMISSION DEVICE**

(30) Priority: 21.08.2012 JP 2012182689
(71) Applicant: Sony Corporation, Tokyo 108-0075 (JP)
(72) Inventor: KITAHARA, Jun, Tokyo 108-0075 (JP); KITAZATO, Naohisa, Tokyo 108-0075 (JP)
(74) Representative: Witte, Weller & Partner Patentanwälte mbB
(86) International application number: PCT/JP2013/003894
(87) International publication number: WO 2014/030283

(57) **Abstract**

[Object] To improve a quality of a service that uses an application capable of processing broadcast data and an application information table that manages an operation of the application.

[Solving Means] Validation information for validating an electronic signature attached to either one of an application capable of processing first data to be broadcasted and an application information table that manages an operation of the application, which are transmitted to an information processing apparatus via a network, is transmitted by a data carousel method.

## Description

### Technical Field

The present technique relates to a signature validation information transmission method, an information processing apparatus, an information processing method, and a broadcast delivery apparatus.

### Background Art

In recent years, a technique that enables an application delivered via a network such as the Internet to be executed simultaneous with a reproduction of a broadcast content has been known. As such a technique, a technique called hybrid broadcast broadband TV (hereinafter, referred to as "HbbTV") is known. As a standard of HbbTV, "ETSI TS 102 796" (see Non Patent Document 1) has been developed in Europe. Further, the standard "ARIB STD-B23" (see Non Patent Document 2) conforming thereto has been developed also in our country.

For example, in a system in which an application is executed simultaneous with a reproduction of a broadcast content as in HbbTV, a life cycle of an application from an activation to an end is managed by a data structure called AIT (Application Information Table) section superimposed on a broadcast content. An information terminal that has acquired the AIT section controls the application based on an application control code included in the AIT section.

Moreover, there is an XML-AIT described in an XML format as a format optimal for providing information related to an application to a receiver using a communication network such as the Internet, the XML-AIT including information equivalent to a broadcast AIT section.

Non Patent Document 1: ETSI (European Telecommunications Standards Institute) "ETSI TS 102 796 VI.1.1 (2010-06)" http://www.etsi.org/deliver/etsi_ts/102700_102799/102796/01.01.01_ 60/ts_102796v010101p.pdf (browsed on October 21, 2011)

Non Patent Document 2: Association of Radio Industries and Businesses "Application execution environment standard ARIB STD-B23 1.2 in digital broadcast" http://www.arib.or.jp/english/html/overview/doc/2-STD-B23v1_2.pdf (browsed on October 21, 2011)

### Summary of Invention

### Problem to be solved by the Invention

In the future, a service that provides an application not directly related to broadcast (broadcast-unlinked application) in addition to an application executed in link with a broadcast program of digital terrestrial broadcast or the like (broadcast-linked application) is expected to be started. However, in actually operating a service that uses a broadcast-unlinked application, there are still various problems to be solved, and countermeasures are desired.

It is an object of the present technology to provide a signature validation information transmission method, an information processing apparatus, an information processing method, and a broadcast delivery apparatus with which a quality of a service that uses and an application capable of processing broadcast data and an application information table that manages an operation of the application can be improved.

### Means for solving the Problem

To solve the problems described above, a signature validation information transmission method according to the present technology includes transmitting, by a data carousel method, validation information for validating an electronic signature attached to either one of an application capable of processing first data to be broadcasted and an application information table that manages an operation of the application, which are transmitted to an information processing apparatus via a network.

In the signature validation information transmission method, the validation information may be placed in component_tag = 0x40 as a module, and information for causing the information processing apparatus to detect update of the transmitted validation information may be placed in DII.

In the signature validation information transmission method, the validation information may be stored in a route certificate descriptor and transmitted.

In the signature validation information transmission method, a value indicating transmission of the validation information may be stored as a value of root_certificate_type in the route certificate descriptor.

In the signature validation information transmission method, the validation information may be stored in a predetermined storage area of storage areas, to which a public key certificate for data broadcast can be transmitted, in the route certificate descriptor, and flag information indicating that the validation information is transmitted may be placed in the route certificate descriptor.

An information processing apparatus based on another viewpoint of the present technology includes: an acquisition unit that acquires an application capable of processing first data to be broadcasted and an application information table that manages an operation of the application via a network; and a controller that acquires validation data that is used for validating an electronic signature attached to either one of the acquired application and application information table and transmitted by a data carousel, and validates the electronic signature.

An information processing method based on another viewpoint of the present technology includes: acquiring, by an acquisition unit, an application capable of processing first data to be broadcasted and an application information table that manages an operation of the application via a network; and acquiring, by a controller, validation data that is used for validating an electronic signature attached to either one of the acquired application and application information table and transmitted by a data carousel, and validating the electronic signature.

A broadcast delivery apparatus based on another viewpoint of the present technology includes a transmission unit that transmits, by a data carousel method, validation information for validating an electronic signature attached to either one of an application capable of processing first data to be broadcasted and an application information table that manages an operation of the application, which are transmitted to an information processing apparatus via a network.

### Effect of the Invention

As described above, according to the present technology, a quality of a service that uses an application capable of processing broadcast data and an application information table that manages an operation of the application can be improved.

### Brief Description of Drawings

[Fig. 1] A diagram showing a general outline of an information processing system of this embodiment.
[Fig. 2] A diagram showing a data structure of an XML-AIT of this embodiment.
[Fig. 3] A diagram showing an example of an XML schema defining a logical structure of an application identification descriptor.
[Fig. 4] A diagram showing an example of the XML schema defining the logical structure of the application identification descriptor.
[Fig. 5] A diagram showing a specific example of the application identification descriptor created using the XML schemas shown in Figs. 3 and 4.
[Fig. 6] A diagram showing definitions of application control codes stored in the XML-AIT.
[Fig. 7] A block diagram showing a structure of an information processing apparatus in the system of Fig. 1.
[Fig. 8] A sequence diagram showing a flow of exchanges among a broadcast station, an application server, an XML-AIT server, and the information processing apparatus in the system of Fig. 1.
[Fig. 9] A flowchart showing a processing procedure of the information processing apparatus in the system of Fig. 1.
[Fig. 10] A flowchart showing an operation of a case where a direct tuning operation occurs in the information processing apparatus of this embodiment.
[Fig. 11] A flowchart showing an operation of a case where a shift of a broadcast linked application occurs in the information processing apparatus of this embodiment.
[Fig. 12] A block diagram for explaining a mechanism of the generation and validation of an electronic signature.
[Fig. 13] A conceptual diagram of a dedicated module method of transmitting a broadcast station public key certificate from the broadcast station to the information processing apparatus.
[Fig. 14] A diagram showing a structure of a broadcast station public key certificate descriptor.
[Fig. 15] A flowchart regarding the acquisition and update of the broadcast station public key certificate according to a dedicated module method.
[Fig. 16] A diagram showing a structure of a route certificate descriptor according to a data broadcast extension method (Part I).
[Fig. 17] A flowchart regarding the acquisition and update of the broadcast station public key certificate according to the data broadcast extension method (Part I).
[Fig. 18] A diagram showing a structure of a route certificate descriptor according to a data broadcast extension method (Part II).
[Fig. 19] A flowchart regarding the acquisition and update of the broadcast station public key certificate according to the data broadcast extension method (Part II).
[Fig. 20] A diagram showing a conceptual structure of an XML-AIT of a second embodiment of the present technology.
[Fig. 21] A sequence diagram showing a flow of exchanges among a broadcast station, an application server, and an XML-AIT server, and an information processing apparatus in an information processing system of the second embodiment.
[Fig. 22] A flowchart showing a processing procedure of the information processing apparatus of the second embodiment.
[Fig. 23] A diagram for explaining a mechanism of the generation of an electronic signature and a hash value and validation of them in the second embodiment.

### Mode(s) for Carrying Out the Invention

Hereinafter, embodiments of the present technology will be described with reference to the drawings.

### <First Embodiment>

### [Information Processing System]

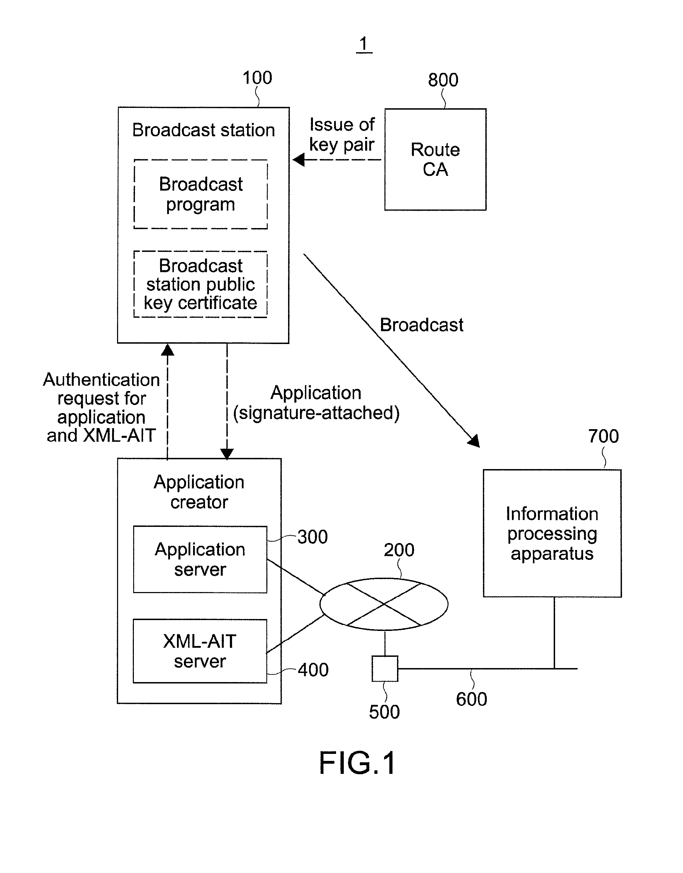

Fig. 1 is a diagram showing a general outline of an information processing system of this embodiment.

The information processing system 1 of this embodiment includes a broadcast station 100, a first network 200 such as the Internet, an application server 300, an XML-AIT server 400, an edge router 500, a second network 600 such as a LAN (Local Area Network), and an information processing apparatus 700 as a broadcast receiver.

The broadcast station 100 transmits digital broadcast signals via a communication medium such as terrestrial, satellite, and IP (Internet Protocol) networks. The broadcast station 100 transmits a so-called broadcast stream obtained by superimposing an AV stream in which transport streams of a video, audio, subtitle, and the like are multiplexed, data accompanying the AV stream, and the like. The data accompanying the AV stream includes, for example, a markup language such as HTML and BML.

The application server 300 is connectable to the first network 200 and provides a broadcast-unlinked application not directly related to the broadcast to the information processing apparatus 700 via the first network 200. The broadcast-unlinked application is an application created by those other than the creator of a broadcast resource, and while processing of acquiring various types of broadcast resources of a video, audio, subtitle, SI information, data broadcast, and the like from the broadcast and presenting them, for example, can be carried out, it is desirable to require a certain authentication on whether the broadcast resource can actually be accessed.

The XML-AIT server 400 is connectable to the first network 200 and delivers an XML-AIT (Extensible Markup Language-Application Information Table) for managing a broadcast-unlinked application provided from the application server 300 to the information processing apparatus 700 via the first network 200.

It should be noted that the application server 300 and the XML-AIT server 400 may be constituted as a single server. The application server 300 and the XML-AIT server 400 each include a CPU, a main memory, a data storage unit, a user interface, and the like and have a typical computer structure.

The edge router 500 is a router for connecting the first network 200 and the second network 600. The second network 600 may either be in a wired or wireless manner.

The information processing apparatus 700 is, for example, a personal computer, a cellular phone, a smartphone, a television apparatus, a game device, a tablet terminal, and an audio/video reproduction apparatus, though a product form thereof is not specifically limited.

The information processing apparatus 700 receives digital broadcast signals from the broadcast station 100 and demodulates the signals to acquire a transport stream. The information processing apparatus 700 is capable of separating a broadcast stream from the transport stream, decoding it, and outputting it to a display unit (not shown) and speaker unit (not shown) connected to the information processing apparatus 700 or a recording apparatus (not shown).

It should be noted that the display unit, the speaker unit, and the recording apparatus may be integrated with the information processing apparatus 700, or they may be directly connected or indirectly connected to the information processing apparatus 700 via the second network 600 as independent apparatuses. Alternatively, an apparatus (not shown) including the display unit and the speaker unit may be directly connected or indirectly connected to the information processing apparatus 700 via the second network 600.

The information processing apparatus 700 is capable of acquiring an XML-AIT file from the XML-AIT server 400, interpreting it, acquiring a broadcast-unlinked application from the application server 300, and performing activation control and the like.

### [Broadcast-Unlinked Application]

Here, a complementary explanation will be given on the broadcast-unlinked application. The broadcast-unlinked application is provided to the information processing apparatus 700 from the application server 300. The broadcast-unlinked application is constituted of, for example, an HTML (Hyper Text Markup Language) document, a BML (Broadcast Markup Language) document, an MHEG (Multimedia and Hypermedia information coding) document, a Java (registered trademark) script, a still image file, and a moving image file.

Attached to the broadcast-unlinked application is an electronic signature for detecting a falsification. An XML signature is used as the electronic signature, for example. The format of the XML signature may be any of a detached signature independent from a substance of the broadcast-unlinked application, an enveloping signature having a format including the substance of the broadcast-unlinked application, and an enveloped signature in a format included in the substance of the broadcast-unlinked application.

An application controller 708 of the information processing apparatus 700 validates the XML signature according to a procedure for a core validation (Core-Validation) including a reference validation (Reference-Validation) and a signature validation (Signature-Validation).

The reference validation is a method of validating a reference (Reference) digest value (DigestValue) by applying a normalization transformation process (Transform) and a digest calculation algorithm (DigestMethod) to a resource (substance of broadcast-unlinked application). A result obtained by the reference validation and the registered digest value (DigestValue) are compared, and when the values do not match, the validation becomes a failure.

The signature validation is a method of serializing signature information (SignatureInfo) elements by a normalization method designated by an XML normalization algorithm (CanonicalizationMethod), acquiring key data using key information (KeyInfo) and the like, and validating a signature using a method designated by a signature algorithm (SignatureMethod).

In order to attach the electronic signature to the broadcast-unlinked application, an application creator requests the broadcast station 100 to authenticate a pair of the broadcast-unlinked application and the XML-AIT. The broadcast station 100 carefully checks a content of the broadcast-unlinked application and the XML-AIT and when there is no problem in the content, sends the broadcast-unlinked application to which the electronic signature is attached to the application creator as a response. Further, the broadcast station 100 transmits a broadcast station public key certificate including a public key necessary for validating the electronic signature by a data carousel corresponding to a broadcast channel or an event (program) accessed by the broadcast-unlinked application.

### [Data Structure of XML-AIT]

Next, a data structure of the XML-AIT will be described.

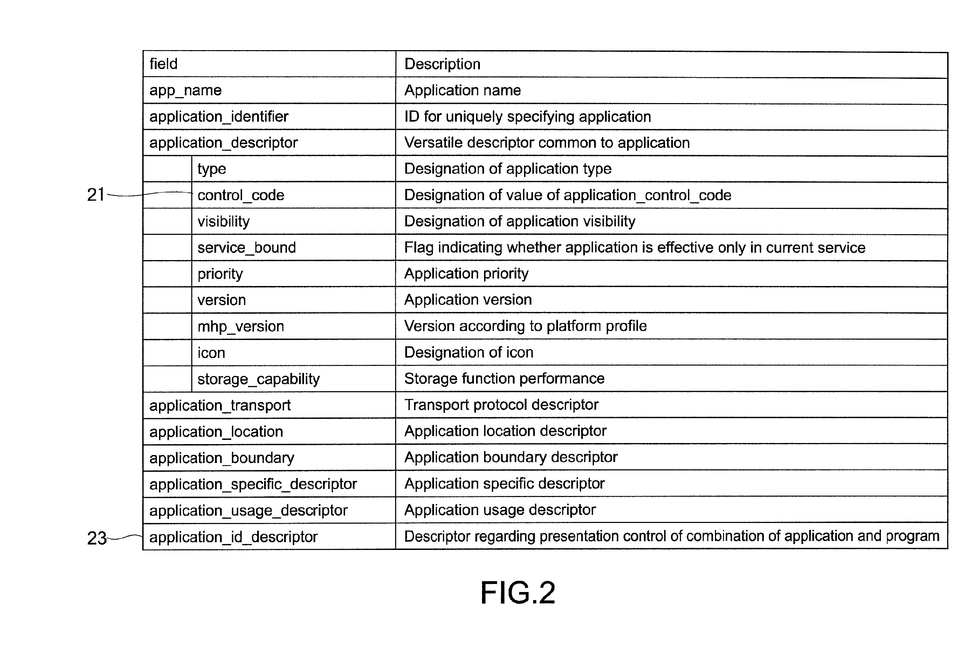

Fig. 2 is a diagram showing the data structure of the XML-AIT of this embodiment.

The XML-AIT stores, for each application, an application name, an application identifier, an application descriptor, an application type, an application control code 21, an application visibility, a flag indicating whether an application is effective in only the current service, an application priority, an application version, a version according to platform profile, an icon, storage function performance, a transport protocol descriptor, an application location descriptor, an application boundary descriptor, an application specific descriptor, an application usage descriptor, an application mode descriptor, an application identification descriptor 23, and the like.

### [Details of Application Identification Descriptor 23]

Next, details of the application identification descriptor 23 will be described.

As the application identification descriptor 23, the following is included.
1. Information defining a broadcast unit accessible by a broadcast-unlinked application, such as a broadcast station affiliation, a broadcast station, a channel, and an event (program) (third definition information)
2. Information defining a type of media information (video, audio, SI information, subtitle, data broadcast, etc.) constituting a broadcast resource that can be used by a broadcast-unlinked application (hereinafter, referred to as "access permission information") (first definition information)
3. Information that limits an operation of a broadcast-unlinked application using a broadcast resource (hereinafter, referred to as "rendering permission information") (second definition information)

The access permission information and the rendering permission information are collectively referred to as "resource permission information".

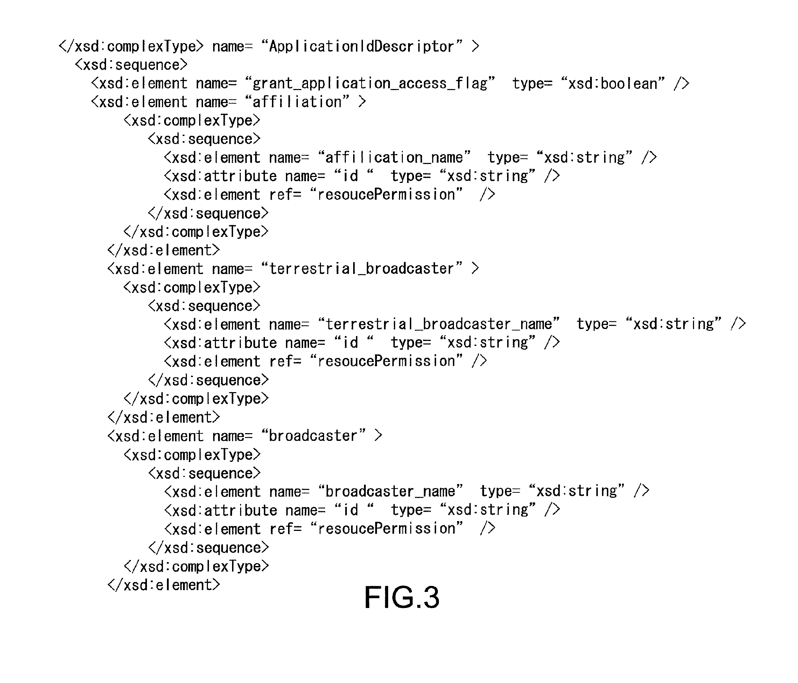

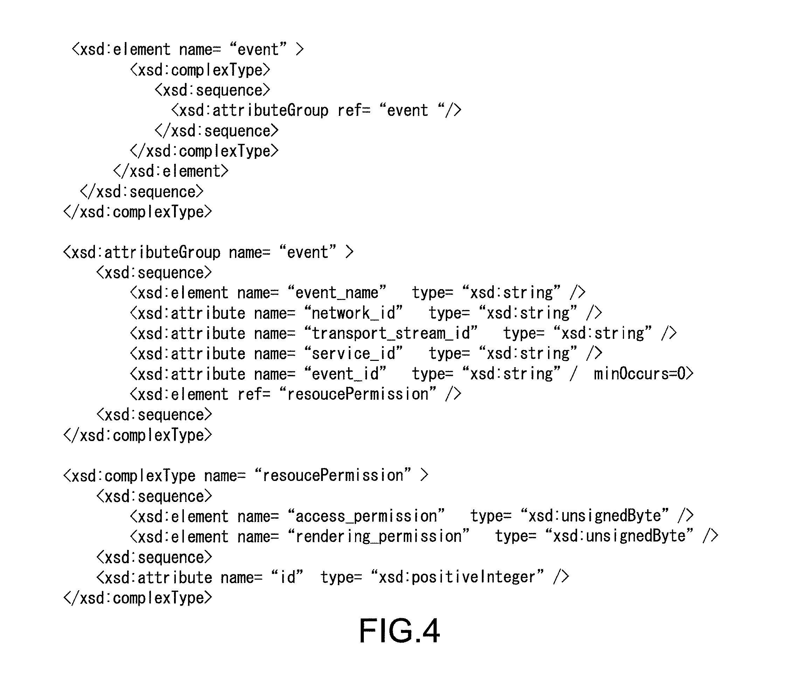

Figs. 3 and 4 are diagrams each showing an example of the XML schema defining a logical structure of the application identification descriptor 23 (ApplicationIdDescriptor).

In the XML schema, an ApplicationIdDescriptor element is declared as the complexType element.

Subservient to the sequence element as a sub-element of the ApplicationIdDescriptor element, a grant_application_access_flag element, an affiliation element, a terrestrial_broadcaster element, a broadcaster element, and an event element are declared.

The ApplicationIdDescriptor element is an element that stores an acceptance application access flag. The acceptance application access flag takes a value of either "0" or "1". When the acceptance application access flag is "0", a content described in the application identification descriptor 23 is interpreted as a condition for prohibiting a simultaneous presentation with an application (blacklist). When the acceptance application access flag is "1", the content described in the application identification descriptor 23 is interpreted as a condition for permitting the simultaneous presentation with an application (whitelist).

The affiliation element includes, subservient thereto, an element that declares a name and form of an affiliation_name element storing a name of the broadcast affiliation station, an element that declares a name and form of an attribute storing an identifier (id) of the broadcast affiliation station, and an element that indicates, as a reference destination, another element defining a structure of resource permission information (resouce_permission) of the broadcast affiliation station.

The terrestrial_broadcaster element includes, subservient thereto, an element that declares a name and form of a terrestrial_broadcaster_name element storing a name of a digital terrestrial broadcast station, an element that declares a name and form of an attribute storing an identifier (id) of the digital terrestrial broadcast station, and an element that indicates, as a reference destination, another element defining a structure of the resource permission information (resouce_permission) of the digital terrestrial broadcast station.

The broadcaster element includes, subservient thereto, an element that declares a name and form of a broadcaster_name element storing a name of the BS/CS broadcast station, an element that declares a name and form of an attribute storing an identifier (id) of the BS/CS broadcast station, and an element that indicates, as a reference destination, another element defining a structure of the resource permission information (resouce_permission) of the BS/CS broadcast station.

The event element includes, subservient thereto, an element that indicates, as a reference destination, another element defining a structure of information for designating an event (attributeGroup_name element).

The attributeGroup_name element includes, subservient thereto, an element that declares a name and form of an event_name element storing a name of an event, an element that defines a name and form of a network_id attribute storing a network ID, an element that defines a name and form of a transport_stream_id attribute storing a transport stream ID, an element that defines a name and form of a service_id attribute storing a service ID, an element that defines a name and form of an event_id attribute storing an event ID, and an element that indicates, as a reference destination, another element declaring a structure of the resource permission information (resouce_permission) of the event.

Here, the network_id attribute, the transport_stream_id attribute, and the service_id attribute are information for identifying a channel.

Further, the value of the attribute defining the name and form of the event_id attribute does not need to be described. When there is no description, only the channel has been designated.

In the XML schema, as another complexType element, a resouce_permission element is declared. The resouce_permission element includes, subservient thereto, an element that defines a name and form of an access_permision element storing the access permission information, an element that defines a name and form of a rendering_permission element storing the rendering permission information, and an element that declares a name and form of an attribute storing an identifier (id) of the resource permission information (resouce_permission).

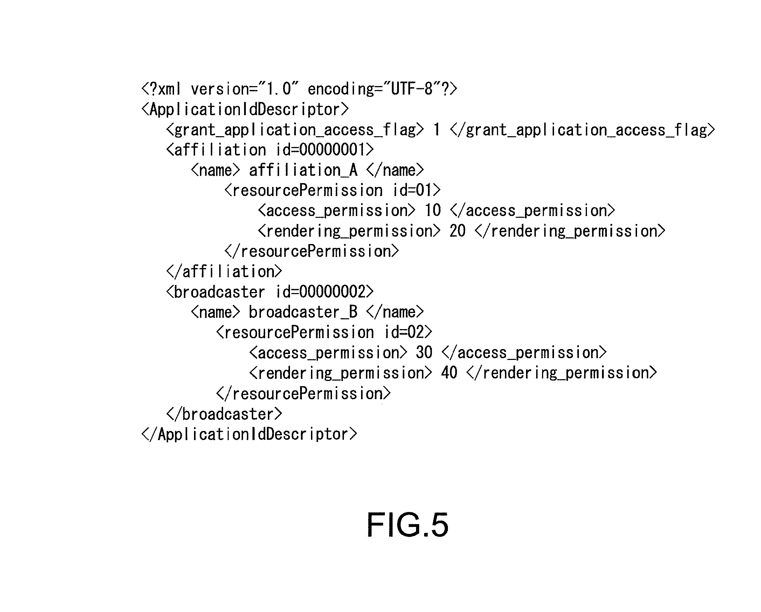

Fig. 5 is a diagram showing a specific example of the application identification descriptor 23 created using the XML schemas shown in Figs. 3 and 4.

The specific example of the application identification descriptor 23 shows a case where the resource permission information is designated as a whitelist with respect to the broadcast unit of the broadcast affiliation station and the BS/CS broadcast station.

Specifically, with respect to a broadcast affiliation station whose acceptance application access flag is "1", identifier is "00000001", and name is "affiliation_A", the resource permission information (resouce_permission) whose identifier is "01", value of the access permission information (access_permission) is "10", and value of the rendering permission information (rendering_permission) is "20" is designated. Moreover, with respect to a BS/CS broadcast station whose identifier is "00000002" and name is "broadcaster_B", the resource permission information (resouce_permission) whose identifier is "02", value of the access permission information (access_permission) is "30", and value of the rendering permission information (rendering_permission) is "40" is designated.

The meanings allocated to the value of the access permission information (access_permission) and the value of the rendering permission information (rendering_permission) are determined arbitrarily in a service.

### [Definitions of Application Control Codes]

A life cycle of an application is dynamically controlled by the information processing apparatus 700 based on the application control code 21 stored in the XML-AIT.

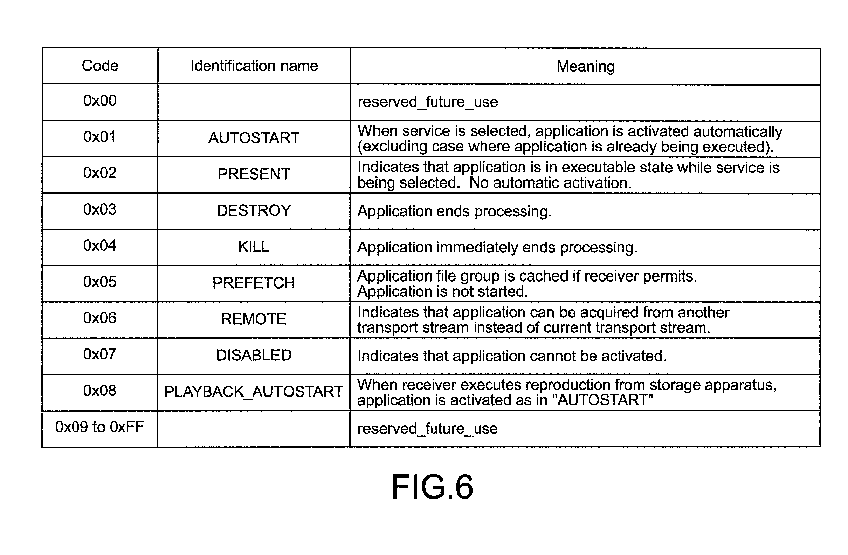

Fig. 6 is a diagram showing definitions of the application control codes 21 stored in the XML-AIT.

As shown in the figure, as the application control codes, there are "AUTOSTART", "PRESENT", "DESTROY", "KILL", "PREFETCH", "REMOTE", "DISABLED", and "PLAYBACK_AUTOSTART" as the standard. The definitions of the application control codes are as follows.

"AUTOSTART" is a code that instructs to automatically activate an application along with a service selection, provided that the application is not yet executed.

"PRESENT" is a code that instructs to set an application to an executable state while the service is being selected. It should be noted that a target application is not automatically activated along with the service selection and is activated upon reception of an activation instruction from the user.

"DESTROY" is a code that instructs to permit an end of an application.

"KILL" is a code that instructs to forcibly end an application.

"PREFETCH" is a code that instructs to cache an application.

"REMOTE" is a code indicating that an application is an application that cannot be acquired in a current transport stream. Such an application becomes usable when acquired from another transport stream or a cache.

"DISABLED" is a code indicating that an application activation is prohibited.

"PLAYBACK_AUTOSTART" is a code for activating an application along with a reproduction of a broadcast content recoded onto a storage (recording apparatus).

### [Structure of Information Processing Apparatus]

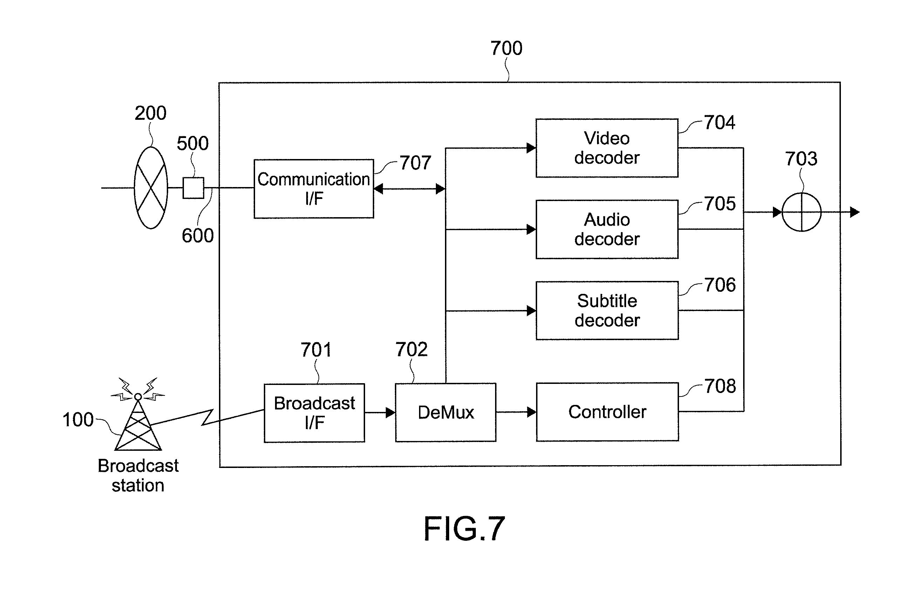

Fig. 7 is a block diagram showing a structure of the information processing apparatus 700 of this embodiment.

The information processing apparatus 700 includes a broadcast interface 701, a demultiplexer 702, an output processing unit 703, a video decoder 704, an audio decoder 705, a subtitle decoder 706, a communication interface 707 (acquisition unit), and an application controller 708 (controller).

The broadcast interface 701 includes an antenna and a tuner and uses them to receive digital broadcast signals selected by the user. The broadcast interface 701 outputs a transport stream acquired by carrying out demodulation processing on the received digital broadcast signals to the demultiplexer 702.

The demultiplexer 702 separates a stream packet of a broadcast content, an application packet, and an AIT section packet from the transport stream. The demultiplexer 702 separates a video ES (Elementary Stream), an audio ES, and a subtitle ES from the stream packet of the broadcast content. The demultiplexer 702 distributes the video ES to the video decoder 704, the audio ES to the audio decoder 705, the subtitle ES to the subtitle decoder 706, and the application packet and a PSI/SI (Program Specific Information/Service Information) packet including the AIT section to the application controller 708.

The video decoder 704 decodes the video ES to generate a video signal and outputs the generated video signal to the output processing unit 703. The audio decoder 705 decodes the audio ES to generate an audio signal and outputs the generated audio signal to the output processing unit 703.

The subtitle decoder 706 decodes the subtitle ES to generate a subtitle signal and outputs the generated subtitle signal to the output processing unit 703.

The broadcast interface 701, the demultiplexer 702, the output processing unit 703, the video decoder 704, the audio decoder 705, and the subtitle decoder 706 constitute a broadcast processing unit that receives and processes a broadcast content.

The communication interface 707 is an interface for establishing communication with an external apparatus via the second network 600 such as a LAN. The communication interface 707 may take either wireless communication or wired communication.

The application controller 708 is a controller that carries out processing related to control of applications.

The output processing unit 703 synthesizes the video signal from the video decoder 704, the audio signal from the audio decoder 705, the subtitle signal from the subtitle decoder 706, the video signal and audio signal from the application controller 708, and the like and outputs the resultant to the recording apparatus (not shown), display unit, and speaker unit (not shown) connected to the information processing apparatus 700.

A part or all of the structure including at least the application controller 708 of the information processing apparatus 700 can be provided by a computer including a CPU (Central Processing Unit) and a memory and a program that causes the computer to function as the broadcast processing unit, the application controller 708, and the like.

### [Operation of Information Processing System 1]

Next, an operation of the information processing system 1 of this embodiment will be described.

(1. Control of Use of Broadcast Resource by Broadcast-unlinked application)

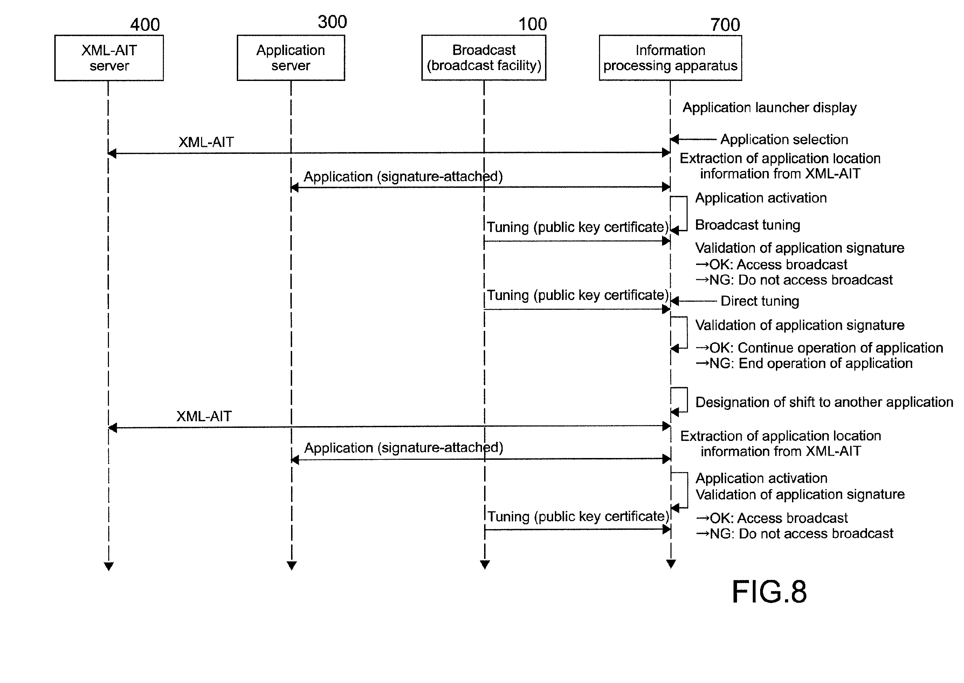

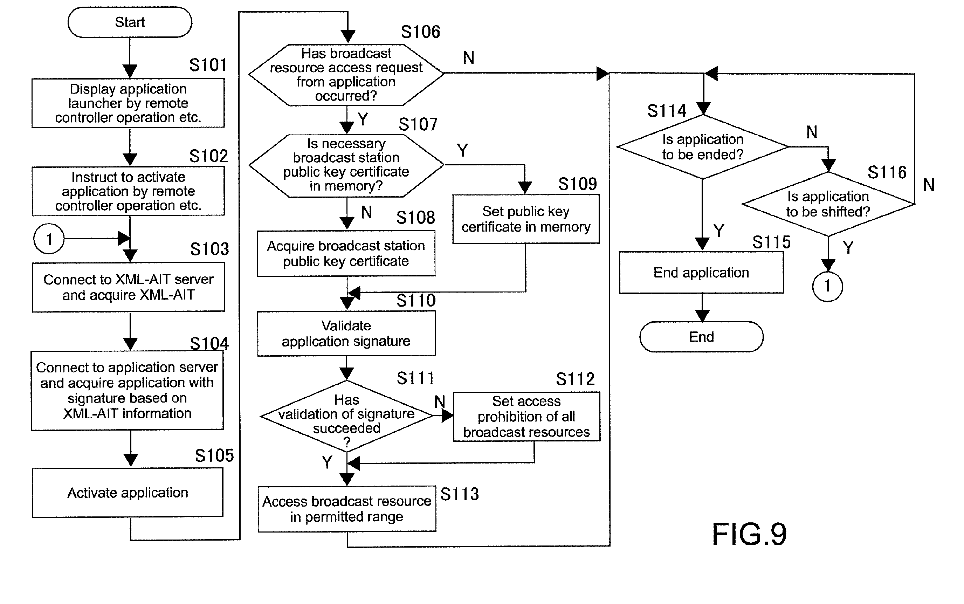

Fig. 8 is a sequence diagram showing a flow of exchanges among the broadcast station 100 (broadcast deliver apparatus), the application server 300, the XML-AIT server 400, and the information processing apparatus 700. Fig. 9 is a flowchart showing a processing procedure of the information processing apparatus 700.

The information processing apparatus 700 displays an application launcher selected by the user using a remote controller, for example (Step S101). The application launcher is realized by, for example, a so-called resident application mounted on the information processing apparatus 700, HTML 5 (Hyper Text Markup Language 5) presented by an HTML browser, or BML (Broadcast Markup Language). The application launcher displays a menu of a broadcast-unlinked application.

The user can select a broadcast-unlinked application to be activated using a remote controller, for example. In the menu of the broadcast-unlinked application of the menu displayed in the application launcher, a script for causing the information processing apparatus 700 to acquire an XML-AIT for a broadcast-unlinked application or the like is incorporated.

As an arbitrary broadcast-unlinked application is selected by an operation of the user using the remote controller on the menu of the broadcast-unlinked application displayed in the application launcher (Step S102), a script corresponding to the broadcast-unlinked application is executed, and thus the application controller 708 of the information processing apparatus 700 acquires an XML-AIT for the broadcast-unlinked application from the XML-AIT server 400 (Step S103).

The application controller 708 of the information processing apparatus 700 acquires an electronic signature-attached broadcast-unlinked application from the application server 300 based on application location information described in the acquired XML-AIT (Step S104) and immediately activates the acquired broadcast-unlinked application (Step S105).

The application controller 708 monitors a broadcast resource access request from the broadcast-unlinked application (Step S106). When detecting the access request of a broadcast resource from the broadcast-unlinked application (Y in Step S107), the application controller 708 checks whether or not the broadcast station public key certificate corresponding the broadcast resource is stored in the memory of the information processing apparatus 700 (Step S107).

If the broadcast station public key certificate is not stored in the memory of the information processing apparatus 700, the application controller 708 of the information processing apparatus 700 waits for a target broadcast station public key certificate to be transmitted by a data carousel. When receiving the target broadcast station public key certificate transmitted by the data carousel, the application controller 708 stores it in the memory (Step S108).

The application controller 708 validates the electronic signature attached to the broadcast-unlinked application being executed, using the broadcast station public key certificate stored in the memory (Step S110). When failing in the validation of the electronic signature (N in Step S111), the application controller 708 makes a setting so that an access to all broadcast resources by the broadcast-unlinked application is prohibited (Step S112).

After setting the access prohibition or when succeeding in the validation of the electronic signature (Y in Step S111), the application controller 708 refers to access permission information (access_permission) described in the XML-AIT and accesses the broadcast resource in a range permitted to the broadcast-unlinked application (Step S113). At this time, there is also a case where the access to all the broadcast resources is not permitted. In this case, the access to the broadcast resources is not carried out and only the broadcast-unlinked application is displayed.

For example, the application identification descriptor 23 shown in Fig. 5 is acquired, and the value "10" as the access permission information (access_permission) means that all broadcast resources can be used. Here, the expression "all broadcast resources" refers to all types of media information to be broadcasted (video, audio, SI information, subtitle, data broadcast, etc.).

In this assumption, when a broadcast resource for which an access has been requested by the executed broadcast-unlinked application is a broadcast resource from a broadcast station belonging to a broadcast affiliation station "affiliation_A", it is judged that the broadcast resource can be accessed by the broadcast-unlinked application.

Further, when a broadcast resource for which an access has been requested by the executed broadcast-unlinked application is a broadcast resource from a broadcast station not belonging to the broadcast affiliation station "affiliation_A", and is a broadcast resource from a broadcast station other than the BS/CS broadcast station "affiliation_B", it is judged that the broadcast resource cannot be accessed by the broadcast-unlinked application.

After that, when an application end instruction or a shift to another application occurs by an operation of the user using a remote controller, for example (YES in Step S114), the application controller 708 of the information processing apparatus 700 ends the broadcast-unlinked application (Step S115).

Further, when an application control code other than "AUTOSTART", "DESTROY", and "KILL" is described in an XML-AIT newly acquired while the broadcast-unlinked application is being executed, the application controller 708 of the information processing apparatus 700 carries out processing of, for example, shifting the state of the broadcast-unlinked application according to the application control code (Step S116) and stands by for the next XML-AIT after that.

There is a case where an operation of switching a broadcast channel (direct tuning operation) is carried out by a manual operation of the user while the broadcast-unlinked application is being executed, for example.

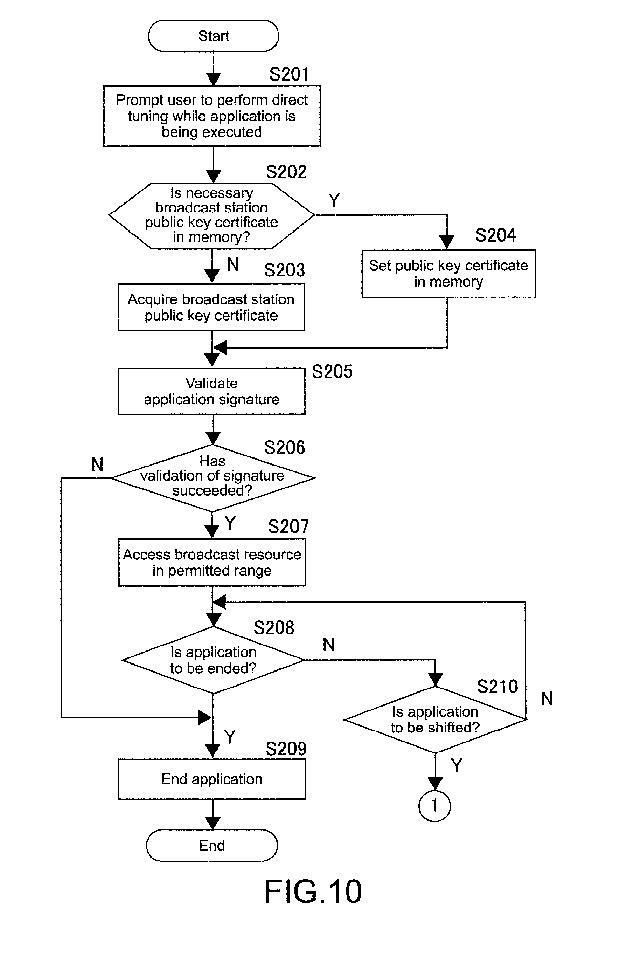

Fig. 10 is a flowchart showing an operation of a case where a direct tuning operation occurs.

When a direct tuning operation occurs (Step S201), the application controller 708 of the information processing apparatus 700 checks whether the broadcast station public key certificate corresponding to the broadcast channel selected by the direct tuning operation is stored in the memory of the information processing apparatus 700 (Step S202).

If the broadcast station public key certificate is not stored in the memory of the information processing apparatus 700, the application controller 708 of the information processing apparatus 700 waits for a target broadcast station public key certificate to be transmitted by a data carousel of the switched broadcast channel and, when receiving the target broadcast station public key certificate transmitted by the data carousel, stores it in the memory (Step S203).

The application controller 708 validates the electronic signature attached to the broadcast-unlinked application being executed, using the broadcast station public key certificate stored in the memory (Step S205). When failing in the validation of the electronic signature (N in Step S206), the application controller 708 ends the broadcast-unlinked application (Step S210).

When succeeding in the validation of the electronic signature (Y in Step S206), the application controller 708 refers to the access permission information (access_permission) described in the XML-AIT and accesses broadcast resources of the broadcast channel switched by the direct tuning operation in a range permitted to the broadcast-unlinked application (Step S207). At this time, there is also a case where the access to all the broadcast resources is not permitted. In this case, the access of the broadcast resources is not carried out and only the broadcast-unlinked application is displayed.

The subsequent operations (operations from Steps S208 to S210) are similar to the operations shown in Fig. 8 (operations from Steps S114 to S115).

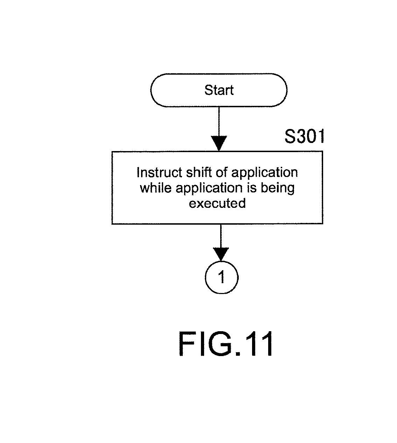

Next, an operation of a case where a shift of a broadcast-unlinked application occurs will be described with reference to Figs. 8 and 11.

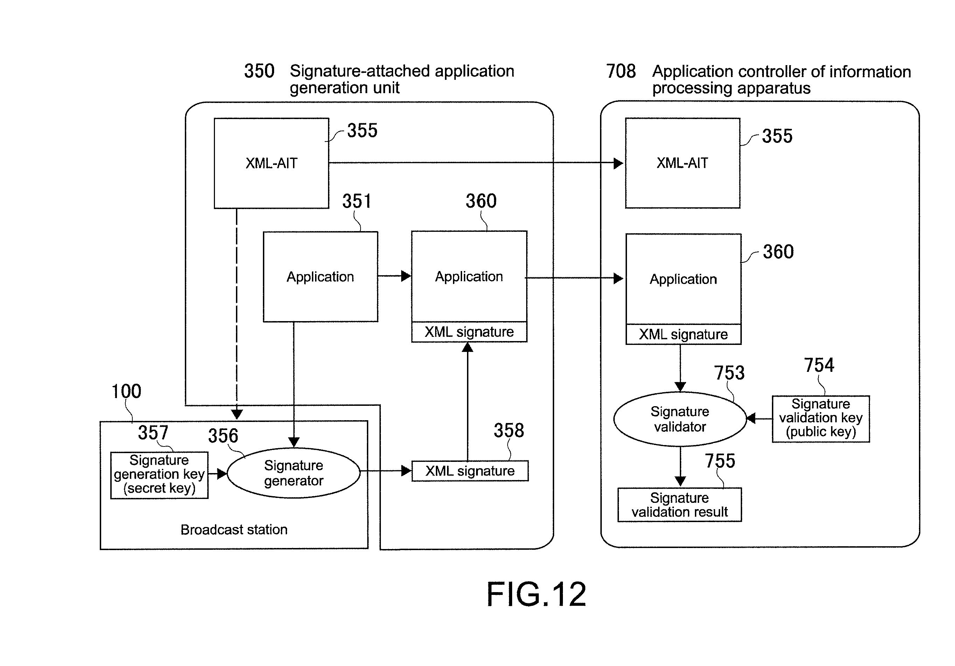

An operation of a case where an instruction to shift a broadcast-unlinked application occurs by an execution of a script incorporated into a broadcast-unlinked application being executed or a manual operation or the like of the user (Step S301 of Fig. 12) is similar to an operation of a case where a broadcast-unlinked application is selected by the user from the above-mentioned application launcher.

### (2. Generation and Validation of Electronic Signature)

Next, the generation and validation of an electronic signature will be described.

Fig. 12 is a block diagram for explaining a mechanism of the generation and validation of an electronic signature.

The XML-AIT server 400 and the application server 300 may be a single server that possessed by an application creator or may be different servers. Here, the XML-AIT server 400 and the application server 300 are collectively referred to as "server". The server is an apparatus having a typical computer structure, which is constituted of a CPU, a main memory, a storage device such as an HDD, an input apparatus such as a mouse and a keyboard, a display unit such as a liquid crystal display, and the like. The main memory and the storage device store an OS (Operating System), software such as a server application program, a broadcast-unlinked application to be provided to the information processing apparatus 700, an XML-AIT file for each application, a signature generation key, and the like.

The server includes a signature-attached application generation unit 350. Specifically, the signature-attached application generation unit 350 is realized by a program loaded to the main memory and the CPU that executes the program.

The application creator requests the broadcast station 100 to authenticate an application 351 and an XML-AIT 355.

Also as shown in Fig. 1, the broadcast station 100 carefully checks a content of the application 351 and the XML-AIT 355 as targets of the authentication requested by the application creator and when there is no problem in the content, sets a secret key of a pair of the secret key and the broadcast station public key certificate that are issued by a route CA 800 as a signature generation key 357 in a signature generator 356. The signature generator 356 generates a digest using a hash function for a signature with respect to the application 351 and encrypts the digest using the signature generation key (secret key) 357 to generate an XML signature 358. The broadcast station 100 sends the generated XML signature 358 to the server as a response. The signature-attached application generation unit 350 adds the XML signature 358 as the response from the broadcast station 100 to the application 351 to generate an electronic signature-attached application 360, and delivers it to the information processing apparatus 700.

The application controller 708 of the information processing apparatus 700 extracts an XML signature by a signature generator 753 from the electronic signature-attached application 360 acquired from the server and acquires a signature validation result 755 by validating the XML signature using a public key 754 that is a signature validation key taken from the broadcast station public key certificate.

Next, a method of transmitting the broadcast station public key certificate from the broadcast station 100 to the information processing apparatus 700 will be described.

The method of transmitting the broadcast station public key certificate from the broadcast station 100 to the information processing apparatus 700 includes a dedicated module method, a data broadcast extension method (Part I), and a data broadcast extension method (Part II), etc.

### (1. Dedicated Module Method)

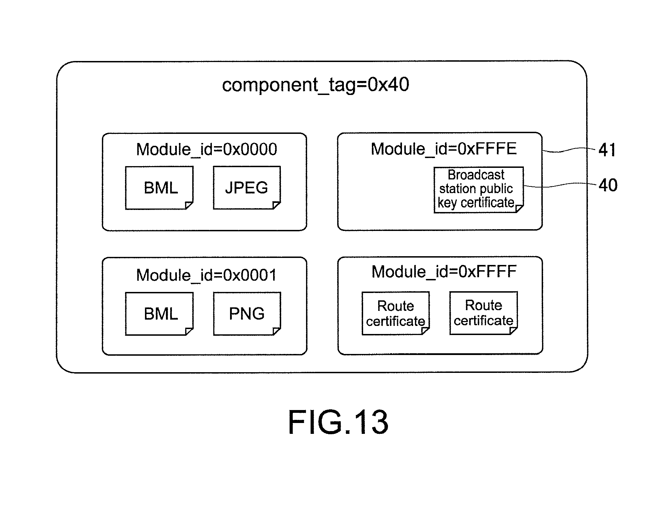

Fig. 13 is a schematic diagram of the dedicated module method.

In the dedicated module method, in component_tag = 0x40 that is a module including a start document that should be first activated when a data broadcast program is selected by the user, a dedicated module (for example, module_id = 0xFFFE 42 for transmitting a broadcast station public key certificate 41 is newly placed.

Further, in order to inform the information processing apparatus 700 of the update of the broadcast station public key certificate delivered by the dedicated module, the broadcast station public key certificate descriptor is placed in DII (Download Info Indication).

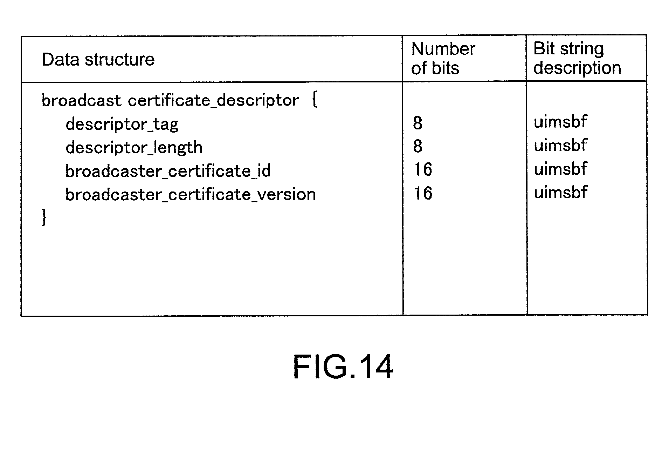

Fig. 14 is a diagram showing a structure of a broadcast station public key certificate descriptor.

The broadcast station public key certificate descriptor (broadcast certificate_descriptor) includes an ID (broadcaster_certificate_id) for identifying the broadcast station public key certificate and a version of the broadcast station public key certificate (broadcaster_certificate_version).

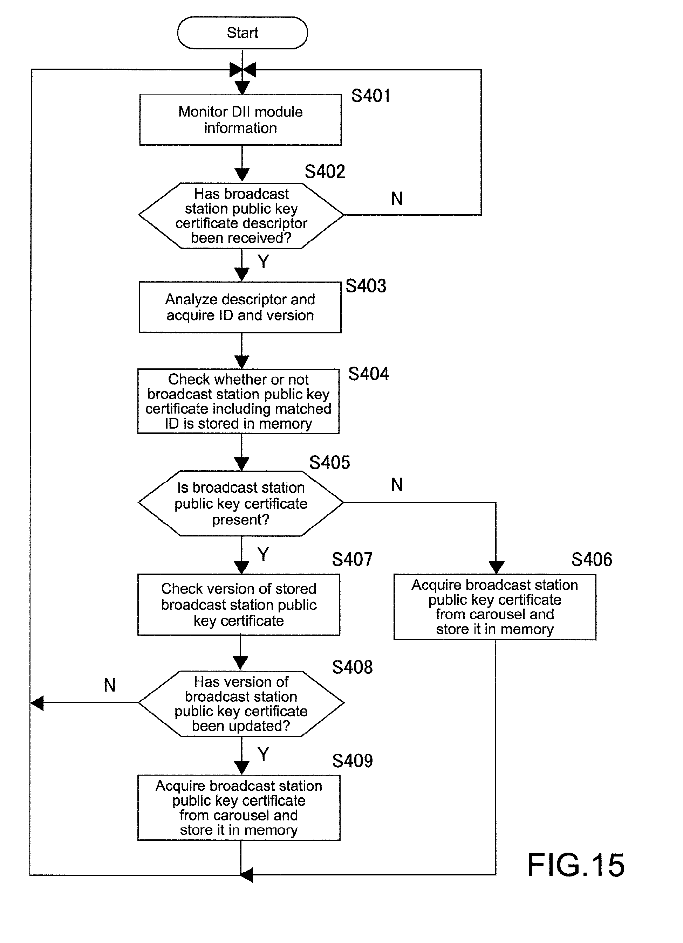

Fig. 15 is a flowchart regarding the acquisition and update of the broadcast station public key certificate by the dedicated module method.

First, a controller 708 of the information processing apparatus 700 monitors DII module information transmitted by a data carousel (Step S401). When detecting that the DII module information includes a broadcast station public key certificate descriptor (Y in Step S402), the controller 708 of the information processing apparatus 700 analyzes the broadcast station public key certificate descriptor and extracts an ID and a version from the broadcast station public key certificate descriptor (Step S403).

The application controller 708 compares the IDs of the broadcast station public key certificates already stored in the memory with the ID acquired at this time and checks whether or not the broadcast station public key certificate including a matched ID is stored in the memory (Step S404). If the corresponding broadcast station public key certificate is not stored (N in Step S405), the application controller 708 acquires a broadcast station public key certificate transmitted by the data carousel and stores it in the memory (Step S406). After that, the application controller 708 returns to the state of monitoring the DII module information.

If the corresponding broadcast station public key certificate is stored (Y in Step S405), the application controller 708 checks the version of the broadcast station public key certificate stored in the memory (Step S407). The application controller 708 compares the checked version of the broadcast station public key certificate with the version of the broadcast station public key certificate that is acquired at this time and judges whether or not a version-up of the broadcast station public key certificate has occurred (Step S408).

If judging that the version-up of the broadcast station public key certificate has not occurred (N in Step S408), the application controller 708 returns to the state of monitoring the DII module information.

If judging that the version-up of the broadcast station public key certificate has occurred (N in Step S408), the application controller 708 acquires a broadcast station public key certificate transmitted by the data carousel and stores it in the memory (Step S409). After that, the application controller 708 returns to the state of monitoring the DII module information.

As described above, the information processing apparatus 700 can acquire one or more types of broadcast station public key certificates of the latest version with different IDs and stores them in the memory.

### (2. Data Broadcast Extension Method (Part I))

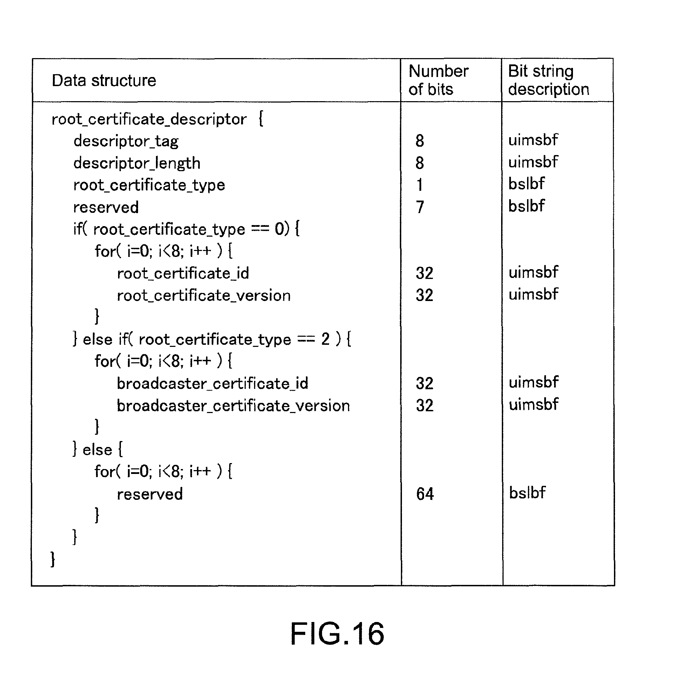

Fig. 16 is a diagram showing a structure of a route certificate descriptor by the data broadcast extension method (Part I).

In the data broadcast extension method (Part I), extension for transmitting a public key certificate of a new service is performed on root_certificate_type of the route certificate descriptor and an ID (broadcaster_certificate_id) for identifying the broadcast station public key certificate and a version (broadcaster_certificate_version) of the broadcast station public key certificate are described there.

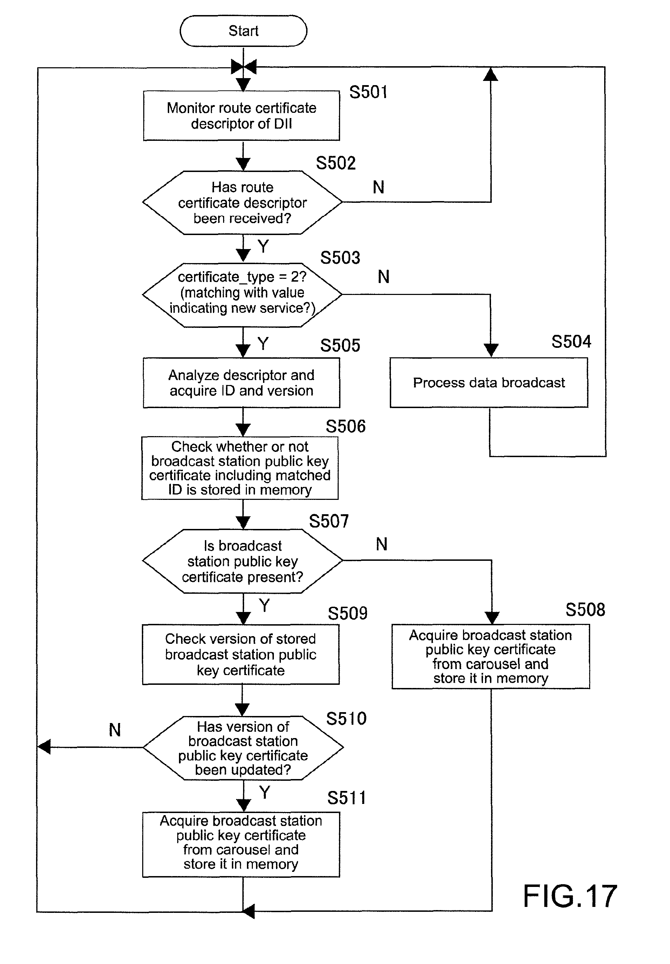

Fig. 17 is a flowchart regarding the acquisition and update of the broadcast station public key certificate by the data broadcast extension method (Part I).

First, the application controller 708 of the information processing apparatus 700 monitors a route certificate descriptor of the DII transmitted by a data carousel (Step S501). When detecting the route certificate descriptor of the DII (Y in Step S502), the controller 708 of the information processing apparatus 700 analyzes the route certificate descriptor and judges whether or not a value (root_certificate_type = 2) indicating a new service is described in the route certificate descriptor (Step S503). If the value (root_certificate_type = 2) indicating the new service is not described, the application controller 708 processes the data broadcast (Step S504), and then returns to the state of monitoring the route certificate descriptor of the DII.

If the value (root_certificate_type = 2) indicating the new service is described in the route certificate descriptor, the application controller 708 extracts an ID and a version of the broadcast station public key certificate from the route certificate descriptor (Step S505). The subsequent operations from Steps S506 to S511 are the same as Steps S404 to S409 of the dedicated module method, and hence descriptions thereof will be omitted.

The application controller 708 compares the IDs of the broadcast station public key certificates already stored in the memory with the ID acquired at this time and checks whether or not the broadcast station public key certificate including a matched ID is stored in the memory (Step S404). If the corresponding broadcast station public key certificate is not stored (N in Step S405), the application controller 708 acquires a broadcast station public key certificate transmitted by the data carousel and stores it in the memory (Step S406). After that, the application controller 708 returns to the state of monitoring the route certificate descriptor of the DII.

If the corresponding broadcast station public key certificate is stored (Y in Step S405), the application controller 708 checks the version of the broadcast station public key certificate stored in the memory (Step S407). The application controller 708 compares the checked version of the broadcast station public key certificate with the version of the broadcast station public key certificate that is acquired at this time and judges whether or not a version-up of the broadcast station public key certificate has occurred (Step S408).

If judging that the version-up of the broadcast station public key certificate has not occurred (N in Step S408), the application controller 708 returns to the state of monitoring the DII module information.

If judging that the version-up of the broadcast station public key certificate has occurred (N in Step S408), the application controller 708 acquires a broadcast station public key certificate transmitted by the data carousel and stores it in the memory (Step S409). After that, the application controller 708 returns to the state of monitoring the DII module information.

As described above, the information processing apparatus 700 can acquire one or more types of broadcast station public key certificates of the latest version with different IDs and store them in the memory.

### (3. Data Broadcast Extension Method (Part II))

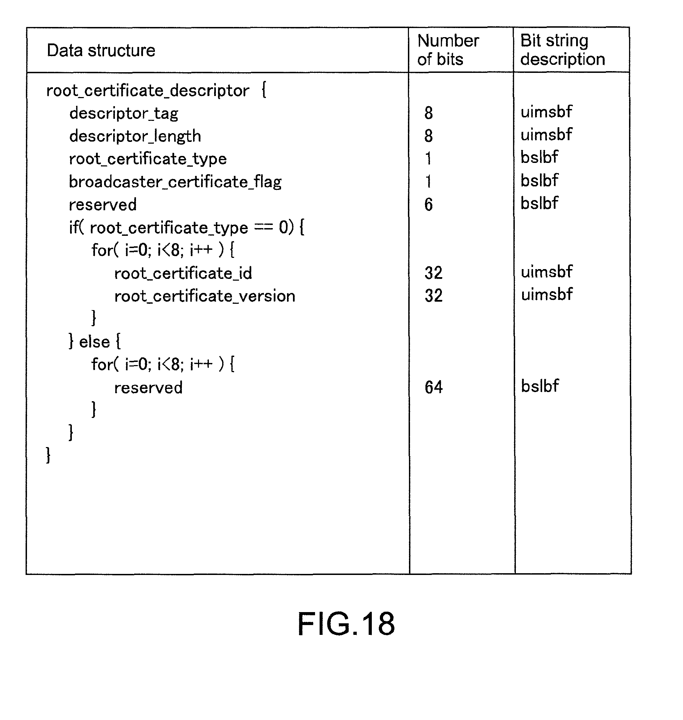

In the data broadcast extension method (Part II), one fixed storage area of storage areas, to which a public key certificate for data broadcast can be transmitted, in a route certificate descriptor is allocated for a new service and an ID (broadcaster_certificate_id) for identifying the broadcast station public key certificate and a version (broadcaster_certificate_version) of the broadcast station public key certificate are described there. Further, for example, as shown in Fig. 18, a new flag (broadcaster_certificate_flag) is placed in the route certificate descriptor. For example, if the value of the flag is "1", it indicates that the broadcast station public key certificate is to be transmitted, and if the value of the flag is "0", it indicates that the broadcast station public key certificate is not to be transmitted.

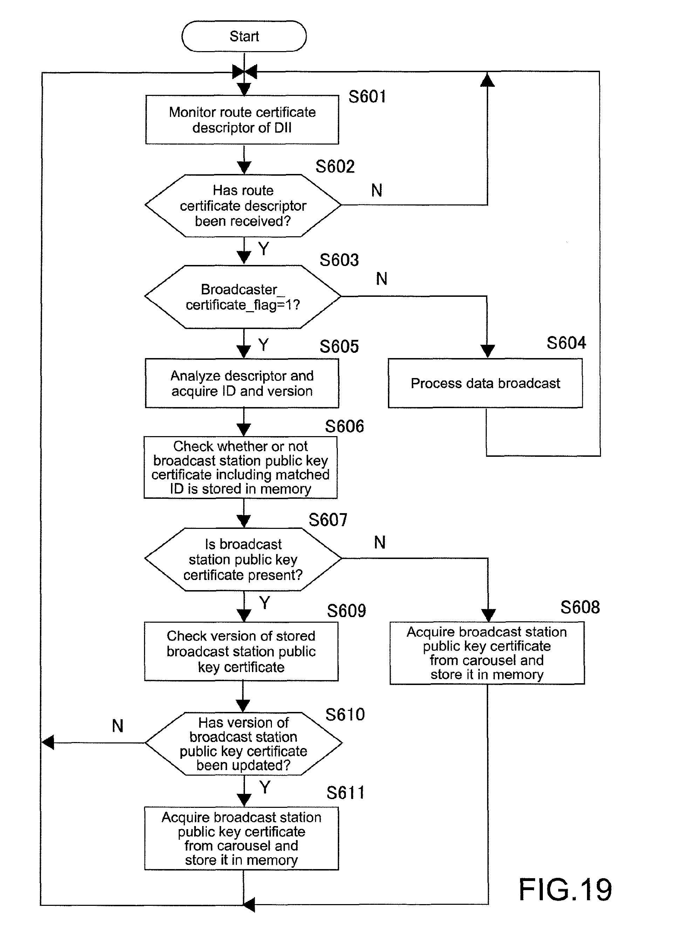

Fig. 19 is a flowchart regarding the acquisition and update of the broadcast station public key certificate by the data broadcast extension method (Part II).

First, the application controller 708 of the information processing apparatus 700 monitors a route certificate descriptor of the DII transmitted by a data carousel (Step S601). If detecting the route certificate descriptor of the DII (Y in Step S502), the controller 708 of the information processing apparatus 700 analyzes the route certificate descriptor and checks the value of the flag (broadcaster_certificate_flag). If the value of the flag is "0", the application controller 708 processes the data broadcast (Step S504) and then returns the state of monitoring the route certificate descriptor of the DII.

If the value of the flag is "0", the application controller 708 extracts an ID and a version of the broadcast station public key certificate from a predetermined storage area of a plurality of storage areas, to which the public key certificate for data broadcast can be transmitted, in the route certificate descriptor (Step S605). The subsequent operations from Steps S606 to S611 are the same as Steps S404 to S409 of the dedicated module method, and hence descriptions thereof will be omitted.

As described above, the information processing apparatus 700 can acquire one or more types of broadcast station public key certificates of the latest version with different IDs and store them in the memory.

### [Effects, etc. of First Embodiment]

In this embodiment, the following effects can be obtained.
1. According to this embodiment, an electronic signature-attached application is transmitted from the application server 300 to the information processing apparatus 700, and hence it is possible to prevent a falsification of the application.
2. The data carousel transmission can be used for transmitting, in the existing digital broadcast, a broadcast station public key certificate used for signature verification of an application. Therefore, the application can be securely transmitted to the information processing apparatus 700 with minimum change points of the existing digital broadcast.
3. A point that resources of the existing digital broadcast for transmitting a route certificate can be used for transmitting the broadcast station public key certificate by the data carousel transmission is also advantageous for minimizing the change points.
4. It is possible to perform a new service that can be authenticated by the application while avoiding a so-called legacy problem, such as an erroneous operation to a digital broadcast receiver already sold in an already started digital broadcast.

### <Second Embodiment>

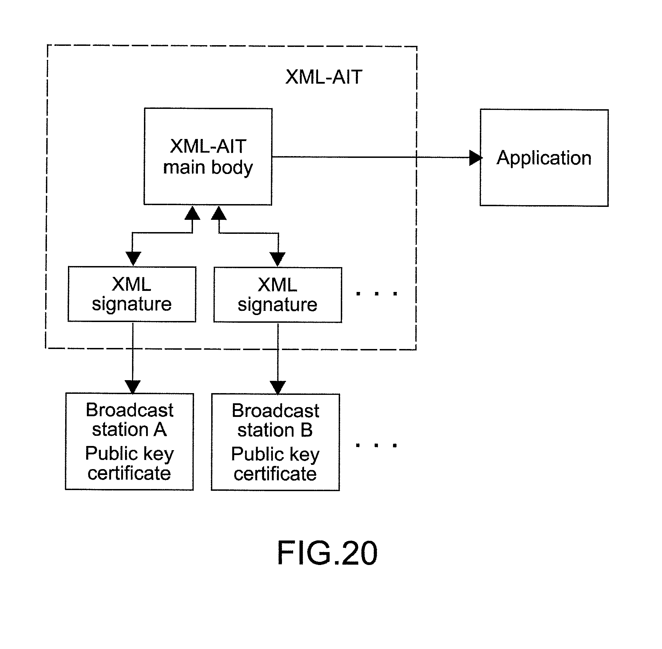

Although the electronic signature is attached to the application in the first embodiment, the electronic signature may be attached to the XML-AIT. According to this method, for example, as shown in Fig. 20, a plurality of broadcast stations (broadcast station A, broadcast station B) permit one application to use a broadcast resource, and electronic signatures 61 and 62 of all the broadcast stations (broadcast station A and broadcast station B) that permit to use the broadcast resource are attached to the XML-AIT.

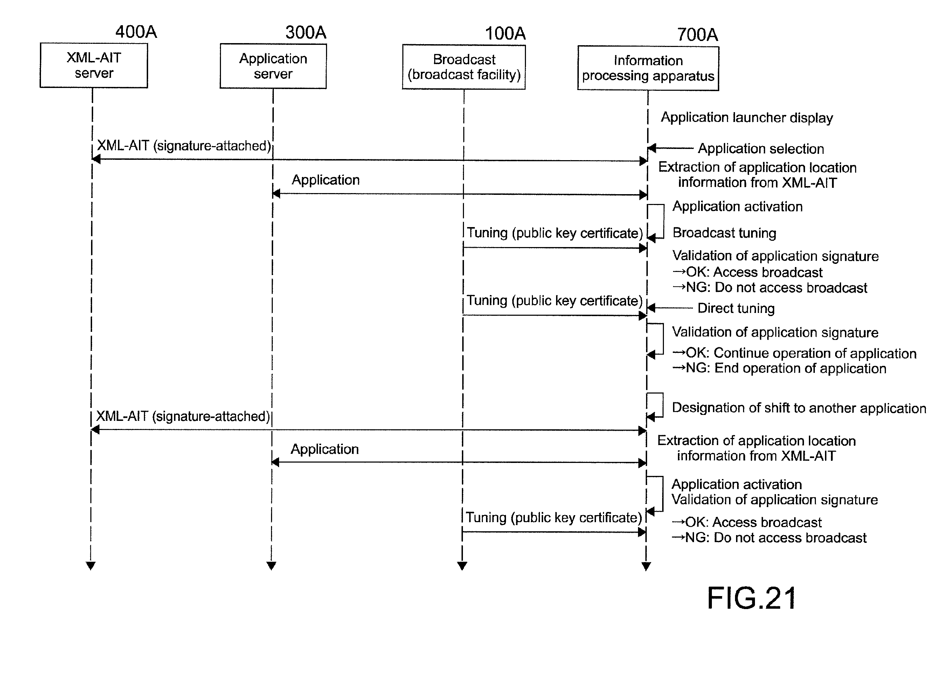

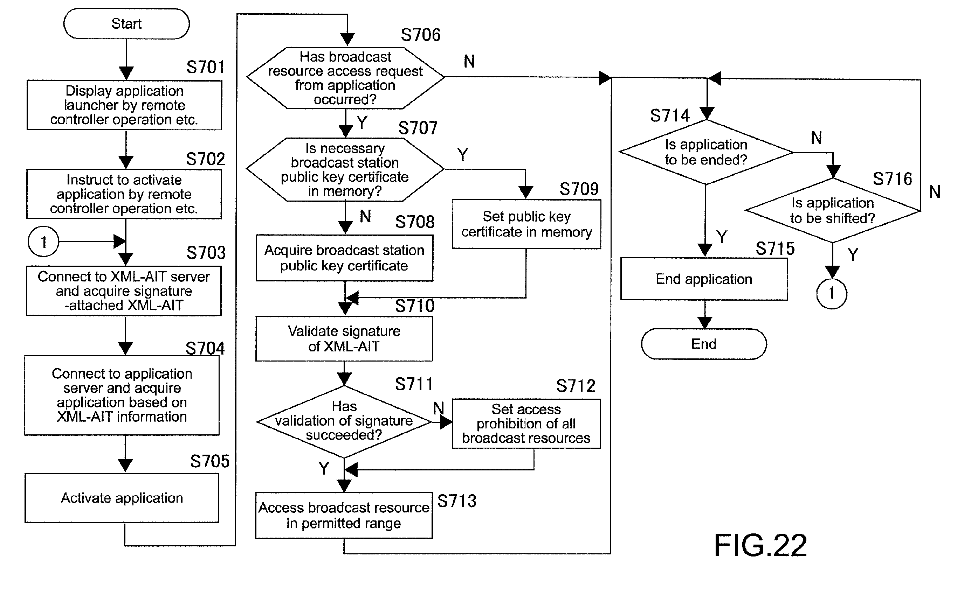

Fig. 21 is a sequence diagram showing a flow of exchanges among a broadcast station 100A, an application server 300A, an XML-AIT server 400A, and an information processing apparatus 700A in an information processing system according to a second embodiment. Fig. 22 is a flowchart showing a processing procedure of the information processing apparatus 700A.

Hereinafter, points of the information processing system according to the second embodiment that are different from those of the information processing system 1 according to the first embodiment will be mainly described.

When, in a menu of a broadcast-unlinked application displayed by an application launcher, an arbitrary broadcast-unlinked application is selected by an operation of the user using a remote controller (Steps S701 and S702), a script corresponding to the broadcast-unlinked application is executed and thus an application controller 708AA of the information processing apparatus 700A acquires an electronic signature-attached XML-AIT for the broadcast-unlinked application from the XML-AIT server 400A (Step S703).

The application controller 708AA of the information processing apparatus 700 acquires an electronic signature-attached broadcast-unlinked application from the application server 300A based on application location information described in the acquired XML-AIT (Step S704) and activates it (Step S705).

The application controller 708A monitors an access request of a broadcast resource from the broadcast-unlinked application (Step S706). If detecting the access request of the broadcast resource from the broadcast-unlinked application (Y in Step S707), the application controller 708A checks whether or not the broadcast station public key certificate corresponding to the broadcast resource is stored in the memory of the information processing apparatus 700 (Step S707).

If the broadcast station public key certificate is not stored in the memory of the information processing apparatus 700A, the application controller 708A of the information processing apparatus 700A waits for a target broadcast station public key certificate to be transmitted by a data carousel. Here, the data carousel transmission of the broadcast station public key certificate is realized by the dedicated module method, the data broadcast extension method (Part I), the data broadcast extension method (Part II), or the like.

When receiving the target broadcast station public key certificate transmitted by the data carousel, the application controller 708A stores it in the memory (Step S708).

The application controller 708A validates an electronic signature attached to the acquired XML-AIT using the broadcast station public key certificate stored in the memory (Step S710). The subsequent operations are the same as those in the first embodiment, and hence descriptions thereof will be omitted.

### [Effects, etc. of Second Embodiment]

In this embodiment, the following effects can be obtained.
1. According to this embodiment, an electronic signature-attached XML-AIT is transmitted from a server 400 to the information processing apparatus 700, and hence it is possible to prevent a falsification of the XML-AIT.
2. The data carousel transmission can be used for transmitting, in the existing digital broadcast, the broadcast station public key certificate used for the signature validation of the XML-AIT. Therefore, it is possible to prevent a falsification of the XML-AIT with the minimum change points of the existing digital broadcast.
3. A point that a resource of the existing digital broadcast for transmitting a route certificate can be used for transmitting the broadcast station public key certificate by the data carousel transmission is also advantageous for minimizing the change points.
4. It is possible to perform a new service that can be authenticated by the application while avoiding a so-called legacy problem, such as an erroneous operation to a digital broadcast receiver already sold in an already started digital broadcast.

### <Modified Example 1>

By the way, in the method of the second embodiment, the falsification of the application cannot be directly detected. In this context, a hash value of the application is embedded in the XML-AIT and thus it is possible to indirectly detect the falsification of the application by comparing a hash value calculated by a substance of the application and the hash value embedded in the XML-AIT and notified in the information processing apparatus. Hereinafter, such a method will be described.

Next, the generation and validation of the electronic signature and the hash value will be described.

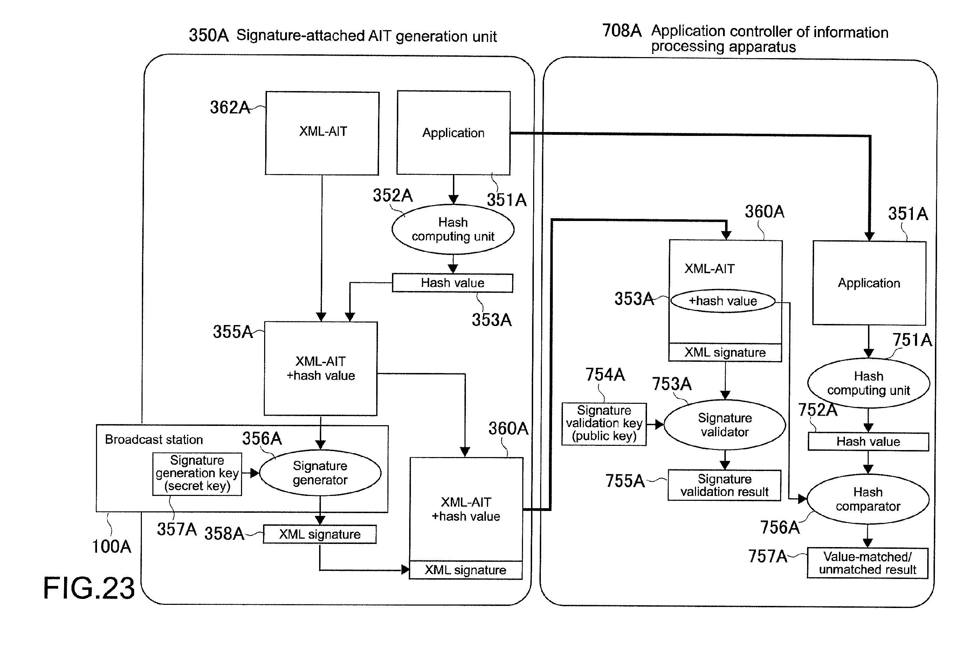

Fig. 23 is a diagram for explaining a mechanism of the generation of an electronic signature and a hash value and validation of them.

The server includes a signature-attached AIT generation unit 350A. Specifically, the signature-attached AIT generation unit 350A is realized by a program for generating an electronic signature and a hash value that is loaded to a main memory and a CPU that executes the program.

The signature-attached AIT generation unit 350A calculates a hash value 353A using a predetermined hash computing unit 352A based on a substance of an application 351A (binary code). As a hash algorithm, there are SHA-1, SHA-2, and the like standardized by FIPS-PUB-180-1, 180-2, for example.

The signature-attached AIT generation unit 350A synthesizes the hash value 353A with an XML-AIT 362A of the application 351A and generates a hash value-attached XML-AIT 355A.

The application creator requests the broadcast station 100A to authenticate the application 351A and the XML-AIT 355A.

The broadcast station 100 carefully checks a content of the application 351A and the XML-AIT 355A as targets of the authentication requested by the application creator and when there is no problem in the content, sets a secret key of a pair of the secret key and the broadcast station public key certificate that are issued by the route CA 800 (see Fig. 1) as a signature generation key 357A in a signature generator 356A. The signature generator 356A generates a digest using a hash function for a signature with respect to the XML-AIT 355A and encrypts the digest using the signature generation key (secret key) 357A to generate an XML signature 358A. The broadcast station 100A sends the generated XML signature 358A to the server as a response.

The signature-attached AIT generation unit 350A of the server adds the XML signature 358A as the response from the broadcast station 100A to the hash value-attached XML-AIT 355A to generate an electronic signature-attached XML-AIT 360A, and delivers it to the information processing apparatus 700A.

The application controller 708A of the information processing apparatus 700 calculates a hash value 752A using a predetermined hash computing unit 751A (hash function) from a substance of the application 351A (binary code) acquired from the server. The hash function used herein needs to be the same as that of the hash computing unit 352A of the signature-attached AIT generation unit 350A of the server. In this regard, the application controller 708A checks the hash algorithm described in the electronic signature-attached XML-AIT 360A acquired from the server and judges whether it is consistent with the hash algorithm of the hash computing unit 751A (hash function). If judging that the hash algorithms are inconsistent, the application controller 708A switches the hash computing unit 751A (hash function) and matches it with that of the hash computing unit 352A of the AIT generation unit 350A of the server.

The application controller 708A uses a hash comparator 756A to compare the hash value 353A and the hash value 752A extracted from the electronic signature-attached XML-AIT 360A acquired from the server and acquires a matched/unmatched result 757A.

The application controller 708A extracts an XML signature from the electronic signature-attached XML-AIT 360A acquired from the server in a signature generator 753A and acquires a signature validation result 755A obtained by validating the XML signature using a signature validation key (public key) 754A.

According to the modified example, the information processing apparatus 700 is provided with the application to which the hash value is added, and hence the information processing apparatus 700 can compare the hash value calculated with respect to the application acquired from the application server 300 with the hash value transmitted by the XML-AIT, to thereby judge the validity of the application.

Although the embodiments presupposing the HbbTV standard have been described, the present technology is not necessarily limited to such a presupposition.

In addition, the present technology is not limited to the embodiments above and can be variously modified without departing from the gist of the present invention.

### Description of Numerals

- 1: information processing system
- 100: broadcast station
- 200: first network
- 300: application server
- 400: XML-AIT server
- 700: information processing apparatus
- 701: broadcast interface
- 702: demultiplexer
- 703: output processing unit
- 704: video decoder
- 705: audio decoder
- 706: subtitle decoder
- 707: communication interface
- 708: application controller
- 800: broadcast station CA

## Claims

1. A signature validation information transmission method, comprising
transmitting, by a data carousel method, validation information for validating an electronic signature attached to either one of an application capable of processing first data to be broadcasted and an application information table that manages an operation of the application, which are transmitted to an information processing apparatus via a network.

2. The signature validation information transmission method according to claim 1, wherein
the validation information is placed in component_tag = 0x40 as a module, and
information for causing the information processing apparatus to detect update of the transmitted validation information is placed in DII.

3. The signature validation information transmission method according to claim 1, wherein
the validation information is stored in a route certificate descriptor and transmitted.

4. The signature validation information transmission method according to claim 3, wherein
a value indicating transmission of the validation information is stored as a value of root_certificate_type in the route certificate descriptor.

5. The signature validation information transmission method according to claim 3, wherein
the validation information is stored in a predetermined storage area of storage areas, to which a public key certificate for data broadcast can be transmitted, in the route certificate descriptor, and
flag information indicating that the validation information is transmitted is placed in the route certificate descriptor.

6. An information processing apparatus, comprising:
an acquisition unit that acquires an application capable of processing first data to be broadcasted and an application information table that manages an operation of the application via a network; and
a controller that acquires validation data that is used for validating an electronic signature attached to either one of the acquired application and application information table and transmitted by a data carousel, and validates the electronic signature.

7. An information processing method, comprising:
acquiring, by an acquisition unit, an application capable of processing first data to be broadcasted and an application information table that manages an operation of the application via a network; and
acquiring, by a controller, validation data that is used for validating an electronic signature attached to either one of the acquired application and application information table and transmitted by a data carousel, and validating the electronic signature.

8. A broadcast delivery apparatus, comprising
a transmission unit that transmits, by a data carousel method, validation information for validating an electronic signature attached to either one of an application capable of processing first data to be broadcasted and an application information table that manages an operation of the application, which are transmitted to an information processing apparatus via a network.
